# EUROPEAN PATENT APPLICATION

(11) **EP 1 304 446 A1**
(43) Date of publication of application: **23.04.2003**
(21) Application number: 02255682.3
(22) Date of filing: 14.08.2002
(51) Int. Cl.: F01D 5/28, C23C 4/02

(54) **Method for replacing a damaged TBC ceramic layer**

(30) Priority: 22.10.2001 US 86148
(71) Applicant: GENERAL ELECTRIC COMPANY, Schenectady, NY 12345 (US)
(72) Inventor: Rigney, Joseph David, Milford, Ohio 45150 (US); Azer, Magdi Naim, West Chester, Ohio 45069 (US)
(74) Representative: Goode, Ian Roy

(57) **Abstract**

The present invention is a method for repairing a TBC ceramic top coat in local regions that have experienced a mechanical or thermally-induced spallation event leaving the underlying bond coat intact. A novel combination of groove design (i.e. spacing, pattern and depth) and laser-surface incident angles fabricated into the remaining bond coat is used to achieve spallation resistance equal to or greater than baseline after applying and maintaining a TBC ceramic patch to the localized areas of spallation. The method is particularly useful, but not limited to, repair of coating systems comprised of physical vapor deposited (PVD) ceramic top coats. In a preferred embodiment, the method of the present invention comprises (1) cleaning the exposed spalled region, (2) treating a limited portion of the bond coat by a grooving process with two linear arrays of equally spaced grooves intersecting at a preselected angle so as to texture the surface, and (3) depositing a ceramic material on the surface of the spalled / textured portion of the bond layer. The grooving process is accomplished with a high energy beam.

## Description

This invention relates generally to components of the hot section of gas turbine engines, and in particular, to a method for repairing a thermal barrier coating (TBC) ceramic top coat in local regions that have experienced a mechanical or thermally induced spallation event leaving the underlying bond coat intact.

In gas turbine engines, for example, aircraft engines, air is drawn into the front of the engine, compressed by a shaft-mounted rotary compressor, and mixed with fuel. The mixture is burned, and the hot exhaust gases are passed through a turbine mounted on a shaft. The flow of gas turns the turbine, which turns the shaft and drives the compressor. The hot exhaust gases flow from the back of the engine, providing thrust that propels the aircraft forward.

During operation of gas turbine engines, the temperatures of combustion gases may exceed 3,000 degrees F, considerably higher than the melting temperatures of the metal parts of the engine, which are in contact with these gases. The metal parts that are particularly subject to high temperatures, and thus require particular attention with respect to cooling, are the hot section components exposed to the combustion gases, such as blades and vanes used to direct the flow of the hot gases, as well as other components such as shrouds and combustors.

The hotter the exhaust gases, the more efficient is the operation of the jet engine. There is thus an incentive to raise the exhaust gas temperature. However, the maximum temperature of the exhaust gases is normally limited by the materials used to fabricate the hot section components of the turbine. In current engines, hot section components such as the turbine vanes and blades are made of cobalt-based and nickel-based superalloys, and can operate at temperatures of up to 2000 - 2300° F.

The metal temperatures can be maintained below melting levels with current cooling techniques by using a combination of improved cooling designs and TBCs. In one approach, a thermal barrier coating system is applied to the metallic turbine component, which becomes the substrate. The TBC system includes a ceramic thermal barrier coating that is applied to the external surface of metal parts within engines to impede the transfer of heat from hot combustion gases to the metal parts, thus insulating the component from the hot exhaust gas. This permits the exhaust gas to be hotter than would otherwise be possible with the particular material and fabrication process of the component.

TBCs are well-known ceramic top coatings, for example, yttrium stabilized zirconia applied by, for example, electron-beam physical vapor deposition (EB-PVD). In the case of nozzles and other components, the ceramic top coat may be applied by air plasma spray (APS) techniques. Ceramic TBCs usually do not adhere optimally directly to the superalloys used in the substrates. Therefore, an additional metallic layer called a bond coat is placed between the superalloy substrate and the ceramic top coat, for example, by diffusion techniques, such as by chemical vapor deposition (CVD), by application of a non-activated slurry , by paint techniques or as an overlay coating deposited by, for example, PVD methods or spray techniques. The bond coat is deposited between the substrate and the TBC to improve adhesion of the TBC to the underlying component. Examples of bond coats include (1) diffusion nickel aluminide or platinum aluminide, whose surface oxidizes to form a protective aluminum oxide scale in addition to improving adherence of the ceramic TBC; and, (2) MCrAIY and ordered intermetallic NiAl overlay coatings.

In some cases after coating, either before installation in an engine or after short duration engine operation, the ceramic coating may be spalled locally and should be replaced to restore function. For certain engine components, it would be more cost effective to employ a local TBC replacement process for those local spalls, avoiding the need to strip and replace the entire ceramic coating.

Currently, HPT blades with TBC coatings (located in the hot section of a gas turbine engine) that experience some level of damage during manufacture are either scrapped or stripped of their defective TBC and recoated. In cases of nozzle airfoils that are TBC coated around the entire airfoil perimeter before being assembled into their bands by braze operations, TBC strip and recoat either is not possible without destroying the braze or is prohibitively expensive, as all other regions except the portion of the coating under repair must be masked. This is particularly expensive when the recoating process is EB-PVD. In either event. the result is that the component is usually scrapped. Similarly, other components that are brazed into large structures, for example, combustor splash plates coated with EB-PVD-applied TBC, and smaller components , are also restricted in that TBC strip and recoat operations are neither technically nor economically feasible.

U.S. Patent No. 5,723,078 by Nagaraj et al., assigned to the assignee of the present invention, describes a generic process for conducting such a local repair. The steps of the process comprise (1) cleaning the limited portion of the bond layer exposed by the localized spallation so as to remove oxides and residue of the ceramic layer; (2) treating the limited portion of the bond layer so as to texture a surface thereof; and (3) depositing a ceramic material on the surface of the limited portion of the bond layer so as to form a ceramic repair that completely covers the limited portion of the bond layer and contacts the remaining portion of the ceramic layer. Specific processes of photolithography and laser grooving are mentioned as possible processes to create the textured surface, but no details are provided.

Using lasers to prepare a substrate surface is known. For example, U.S. Patent No. 5,210,944 to Monson et al., assigned to the assignee of the present invention, describes a method for making a gas turbine engine component. The steps include (1) providing an unfinished gas turbine engine component, (2) directing a laser beam on a selected surface portion to prepare the surface portion before at least one of a subsequent coating and bonding step and (3) depositing at least one layer of an abradable material, a subassembly of the component, or a TBC on the selected surface portion. A textured surface is taught, however, there is no teaching of grooves.

U.S. Patent No. 4,884,820 to Jackson et al. describes a wear resistant, abrasive laser-engraved ceramic or metallic carbide surface for rotary labyrinth seal members. A pulsed laser of a gas type is used to laser engrave a ceramic or metal coating to achieve a plurality of laser-formed depressions forming a roughened surface that presents minute cutting edges. There is no teaching of laser formed grooves.

What is needed is an improved process to conduct local TBC repairs on newly made components or those having been subjected to engine cycling, but which have experienced some spalling. Incident to these repairs are preparation of small surface areas that have been subjected to spalling. Preparation of these surfaces is an important consideration for providing an adequate repair. While focused high energy sources such as lasers have been used to prepare engine component surfaces to receive TBC coatings, it is not readily apparent to those skilled in the art what parameters (i.e. groove spacing, geometry and pattern) or focused high energy settings (i.e. power, incidence angles of the energy beam and traverse rate) are required to produce at least adequate resistance to spallation, equivalent to the newly applied coating, of a replacement TBC bonded to the prepared surface compared to the surrounding original coating material. The present invention fulfills this need, and further provides related advantages.

The present invention is a method for repairing a TBC ceramic top coat in local regions that have experienced a mechanical or thermally-induced spallation event leaving the underlying bond coat intact. A novel combination of groove design (i.e. spacing, pattern and depth) and high energy beam-surface incident angles fabricated into the remaining bond coat is used to achieve spallation resistance equal to or greater than baseline after applying and maintaining a TBC ceramic patch to the localized areas of spallation. The method is particularly useful, but not limited to, repair of coating systems comprised of physical vapor deposited (PVD) or air plasma spray-deposited (APS) ceramic top coats. The method of applying a groove design also can be used even when the bond coat is lost along with the ceramic top coat. In this circumstance, the bond coat can first be reapplied and the novel groove design can be formed into the newly added bond coat. Alternatively, the novel groove design can be formed directly into the base material substrate using the parameters suitable for the substrate material, and the bond coat can be applied over the grooved substrate in a manner that the groove design is preserved.

A local surface, free of an insulating ceramic layer is roughened by focusing a high-energy source on the spalled surface at preselected angles to achieve a predetermined surface condition. A new ceramic coating is applied over the prepared surface by known local application techniques, for example, thermal spray processing, directed vapor deposition (DVD) or reactive sputtering. If required, the repaired coating is blended with respect to the surrounding TBC ceramic top coat in order to maintain surface uniformity and smoothness, as dictated for aerodynamics.

In one embodiment, the method of the present invention comprises (1) cleaning the exposed spalled region, (2) treating a limited portion of the bond coat by a laser grooving process with linear arrays of spaced grooves, and (3) depositing a ceramic material over the textured/textured portion of the bond layer. The spaced grooves can be equally spaced and may be substantially parallel or may intersect at a preselected angle so as to texture the surface.

One advantage of the present invention is the cost savings achieved by local TBC replacement over stripping and replacing the entire ceramic coating.

Another advantage is the increased capability to repair currently un-repairable damaged TBCs on components such as HPT nozzles and LPT nozzles.

Other features and advantages of the present invention will be apparent from the following more detailed description of the preferred embodiment, taken in conjunction with the accompanying figures which illustrate, by way of example, the principles of the invention, and in which:
Figure 1 is a representation of the Laser incidence angle on button samples;
Figure 2 is a representation the Laser incidence angle on pin samples;
Figure 3 a main effects plot for FCT spallation life; and
Figure 4 is a main effects plot for Burner Rig spallation life.

The present invention sets forth the processes for repairing a TBC ceramic top coat in local regions on any turbine engine component, in particular, hot section components, such as turbine blades, turbine vanes, nozzles, combustors and the like that have experienced a mechanical or thermally-induced spallation event causing the removal or the TBC leaving the underlying bond coat intact or causing the removal of the TBC and the underlying bond coat leaving the substrate intact.

Substrate materials often used in turbine parts or airfoils for aircraft engines and power generation equipment may include nickel, cobalt, or iron based superalloys. The alloys may be cast or wrought superalloys. Examples of such substrates are GTD-111, GTD-222, René 80, René 41, René 125, René 77, René N4, René N5, René N6, 4^{th} generation single crystal super alloy MX-4, Hastelloy X, cobalt-based HS-188, and MAR-M509.

As previously discussed, a bond coat is used to enhance adhesion of the TBC to these substrate materials, as the ceramic top coats do not adhere well to these substrate materials. The bond coat may be, for example, a diffusion aluminide, such as NiAl or PtAl base alloy formed to the appropriate thickness by, for example, vapor phase aluminiding (VPA) or chemical vapor deposition (CVD), or it may be a MCrAI(X) where M is an element selected from the group consisting of Fe, Co and Ni and combinations thereof and (X) is an element selected from the group of gamma prime formers, solid solution strengtheners, consisting of, for example, Ta, Re and reactive elements, such as Y, Zr, Hf, Si, and grain boundary strengtheners consisting of B, C and combinations thereof.

Bond coats such as MCrAI(X)s are known to be applied by physical vapor deposition (PVD) processes such as electron beam evaporation (EB), ion-plasma arc evaporation, sputtering, or plasma spray processes such as air plasma spray (APS), high velocity oxy-fuel (HVOF) or low pressure plasma spray (LPPS) and temperatures can be 1800° F or higher. PVD processes are applied in a vacuum and thermal sprays can be controlled so as to be applied under non-oxidizing conditions, while the plasma spray processes are accomplished at lower temperatures.

The present invention is particularly suited for situations where either the TBC, or both the TBC and bond coat have experienced operational damage, the ceramic top coat having spalled locally and/or the bond coat having been severely oxidized, leaving the underlying material intact. In a preferred embodiment, the surface of an airfoil component which has experienced a local spallation event is prepared by cleaning the exposed spalled region of contaminants such as grease, dirt and other foreign material by, for example, grit blasting, vapor degreasing, alkaline cleaning, or vapor honing. It may be necessary or desirable to mask the adjacent ceramic surfaces during these repair procedures.

The exposed bond coat is treated with a laser grooving process producing two arrays of spaced grooves intersecting the component surface at a predetermined angle, for example, between about 15° to about 90°, preferably about 90°, so as to texture the bond coat surface in the form of crosshatching. The grooves are spaced about 1 mil (0.001") to about 8 mil (0.008"), preferably about 2 mil (0.002"). The grooves are spaced apart, preferably uniformly, although some variation in spacing between grooves is acceptable, and from practical considerations, inevitable.

To achieve optimal spallation resistance of the replacement TBC, the angle of incidence for the high energy source, such as a laser or an electron beam, on the surface of the bond coat should be between about 0° to about 75°, preferably about 30°, it being understood that a 0° angle of incidence produces a groove whose sides intersect the surface at 90°. When a bond coat is present, the grooves should be no deeper than the thickness of the environmental bond coating, so that the bond coat is not penetrated.

The high energy source may be a laser, an electron beam or other instrument capable of producing the predetermined groove parameters and depths without penetrating the bond coat and exposing the substrate. The high energy source preferably is an excimer or YAG (yttria-alumina garnet) laser, a harmonic wavelength (of) YAG laser or a diode laser. When a laser is utilized, the laser power should be below about 1 kilowatt (KW) and the traverse rate of the laser across the surface should be controlled so as to achieve a predetermined and consistent energy input per unit length traversed to maintain constant groove depths. Other energy sources may be used, even though they may have different surface energy input, as long as their power requirements are adjusted in a similar manner to achieve these constant groove depths.

After preparation of the bond coat with a predetermined textured surface, a ceramic material, typically one of the commonly applied TBC ceramics, is deposited on the prepared surface using known techniques, such as for example, EB-PVD, thermal spray processing, directed vapor deposition (DVD) or reactive sputtering. DVD is particularly well-suited for application of ceramic material to a small local region. DVD is the high energy evaporation of a metallic ingot, such as zirconium (Zr) or yttrium (Y + Zr), entraining the metal vapors in a gas stream containing O₂ which is directed toward a preselected portion of the surface. The result is the deposition of ZrO₂ or yttria-stabilized zirconia (YSZ) onto the preselected portion of the surface. Because the ceramic can be directed to small, preselected portions of the surface, masking can be minimized or even totally eliminated. Optionally, if required for aerodynamic enhancement, the repaired TBC coating is blended with respect to the surrounding TBC ceramic top coat to maintain surface uniformity and smoothness, for example, by hand polishing, CNC machining, machine grinding and tumbling.

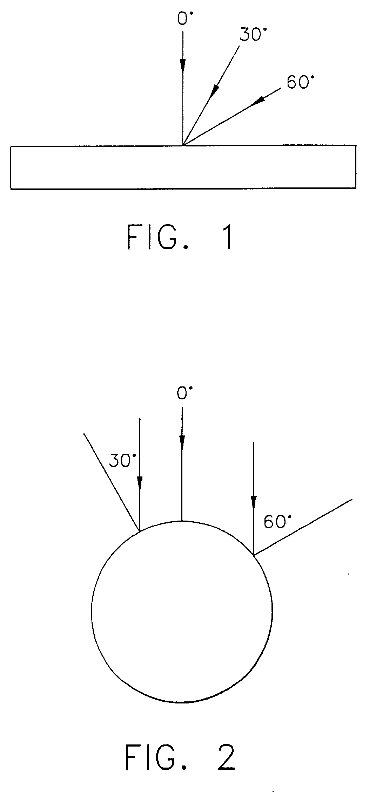

Tests were conducted to evaluate the roles of groove spacing (2 mil or 8 mil), groove geometry (unidirectional or cross-hatched), laser incidence angle relative to the specimen surface normal (0°, 30°, 60°, as depicted in Figures 1 and 2) and bond coat geometry (new versus repaired). Two types of specimens were prepared: (1) furnace cycle test (FCT) buttons and (2) burner rig (B-Rig) pins. Specimens were comprised of 2.5 mil thick PtAl diffusion bond coat applied to a Rene N5 substrate. The bond coated substrate was then covered with 5 mil of 7YSZ ceramic top coat applied by standard EB-PVD techniques. The grooves for all tests were machined using an Excimer laser powered at about 35W, and traversing the specimens at 8 inches per minute under the beam. The various groove geometries fabricated into the burner rig pins and the FCT buttons and tested are displayed in Table 1. Specimens were compared against baseline specimens of new make coatings and marked with X.

### Furnace Cycle Testing

A database of 46 recently prepared button samples of René N5 base material having a PtAl bond coat and a ceramic top coat of yttria stabilized zirconia (7YSZ) applied by EB-PVD were tested for FCT life to establish a baseline average performance of 521 ± 80.3 cycles. One cycle comprised heating the specimen to 2075° F for about 45 minutes, followed by forced air cooling for about 6 minutes (typically to below about 200° F), and reheating in about 9 minutes back to 2075° F. Failure was deemed to have occurred when 50% of the applied coating spalled from the surface of the specimen. An additional 10 button samples were exposed to 80 FCT cycles in order to degrade the TBC system from the as-made state. The furnace exposure (number of cycles/time/temperature) was chosen to simulate the exposure condition for a turbine airfoil over a typical repair interval. The TBC on the as-made or exposed samples was locally removed over an approximately 10 mm diameter region with the aid of a laboratory particulate impact procedure designed to minimally affect the underlying PtAl bond coat. The new and used button specimens were subsequently repaired using the surface preparation, grooving and APS process indicated in Table 1.

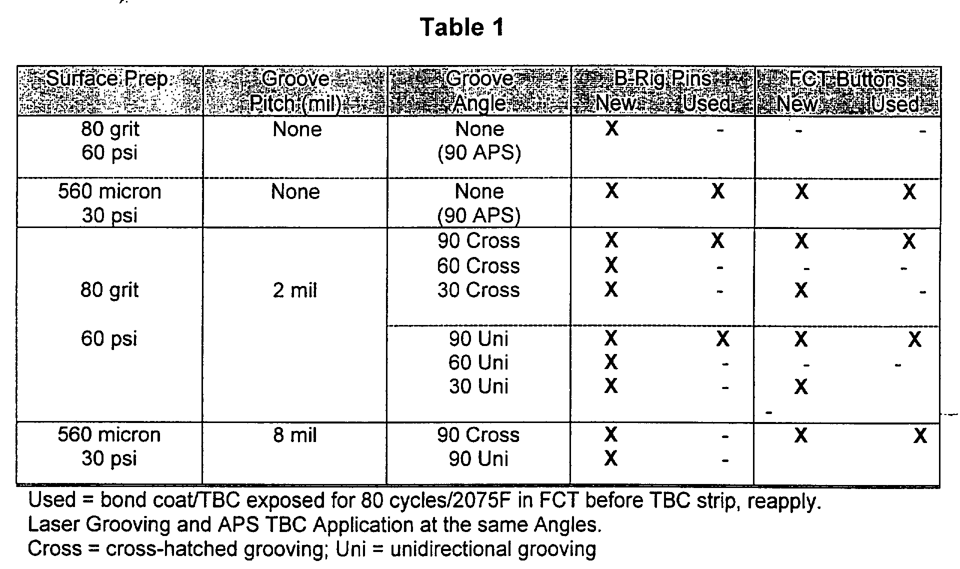

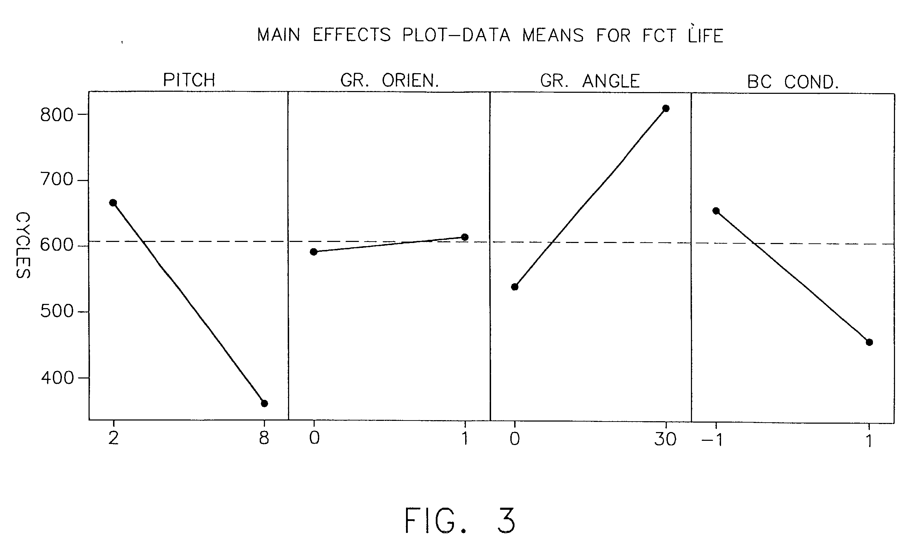

After repair of the center-spalled FCT buttons as set forth in Table 1, the samples (both baseline and test) were exposed to FCT cycling. The number of cycles required to remove 50% of the replacement patch was used as a measure of failure. Table 2 lists the results of the furnace cycle tests. This data was analyzed using MINITAB statistical software from Minitab, Inc. to yield the Main Effects plot of Figure 3.

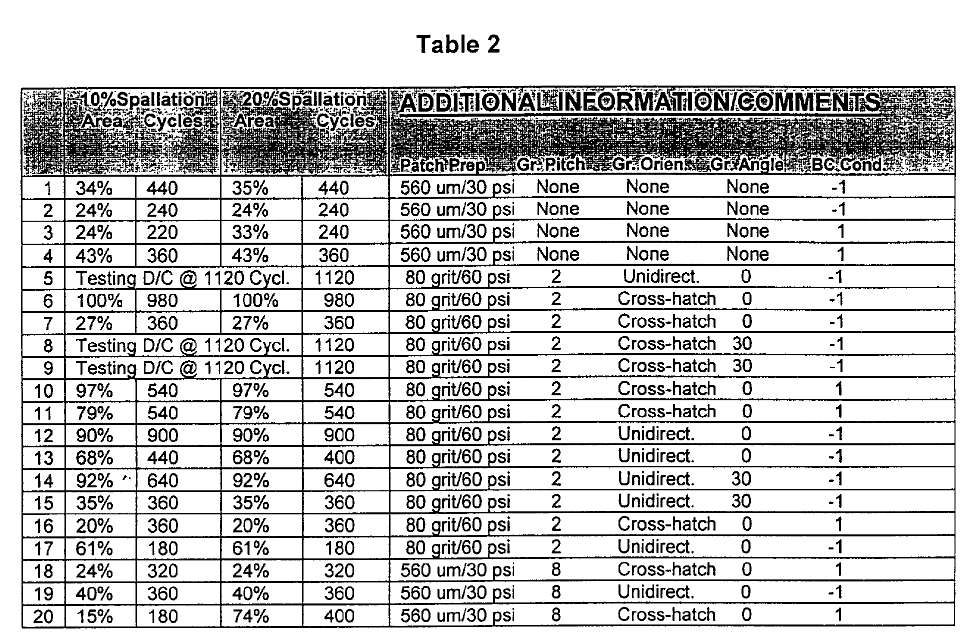

Baseline samples failed at about 521 ± 80.3 cycles. As can be seen in Table 2, grooves spaced at two mils out-performed both samples having grooves spaced at 8 mils and baseline samples. Fig. 3 indicates that a smaller pitch size can withstand more failures than a larger pitch size. Test results as set forth in Fig. 3 indicates that groove orientation (cross-hatched v. uni-directional) had little effect on FCT performance. However, testing indicated that groove incidence angle, which is the wall angle formed by the high energy beam, in this example a laser, with the surface of the spalled region undergoing repair, played a significant role on spallation life. Specimens grooved at a 30° angle using the laser performed much better than those grooved by a laser normal for the surface forming a straight wall (for the purposes of this discussion, 0°), although on average, both did better than baseline. Bond coat that was exposed for 80 cycles at a temperature of about 2075° F for 45 minutes prior to repair failed earlier than un-exposed bond coat. Samples having bond coat that was not exposed to FCT cycles is represented by -1 in the column labeled "BC Cond" in Table 2.

By extrapolating the data, the testing indicated intermediate grooved spacing, for example, about 8 mil to about 2 mil will result in performance superior to that of baseline and grooving at any angle between 0° and 75° will result in superior performing patch replacements.

### Burner Rig (B-Rig) Testing

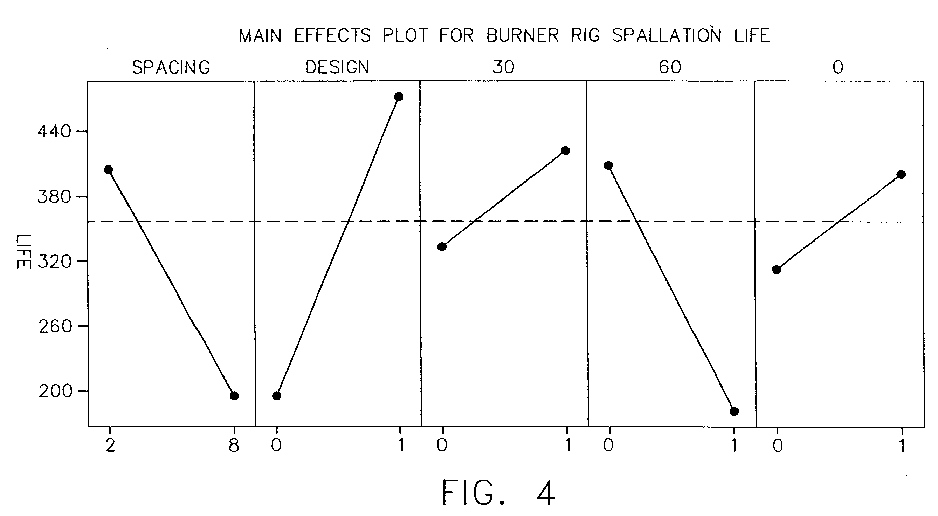

Burner rig spall pins of the same substrate and coating compositions as the button samples were prepared to provide a baseline performance of about 579 ± 159 cycles. An additional 10 pin samples were exposed to 80 FCT cycles. New and previously exposed B-Rig samples were prepared for the experiments by removing a portion of an originally applied TBC as described for the buttons and repaired as set forth in Table 1. B-Rig samples were similarly textured in the spalled regions by lasers having 0°, 30° or 60° angle of incidence with the surface, while FCT buttons were textured in the spalled regions by lasers incident at angles of 0° and 30°. After texturing, the ceramic top coat was replaced by APS techniques. The samples were tested by cycling in a Mach 0.5 flame where each burner rig cycle comprised ramping the sample between 200° F and 2075° F in 15 seconds, holding the sample at 2075° F for 5 minutes, then forced air cooling the sample in 75 seconds to 200° F. The life of the coating was determined as the number of cycles required to spall a 0.1" diameter region of the TBC. The repaired coatings were cycled in the burner rig until 50% of the repaired region was removed by spallation. The number of cycles to failure was used to quantify the life of the patch repair. Test results are displayed in Table 3. This data was analyzed using the MINITAB statistical software previously discussed, to yield the Main Effects plot of Figure 4.

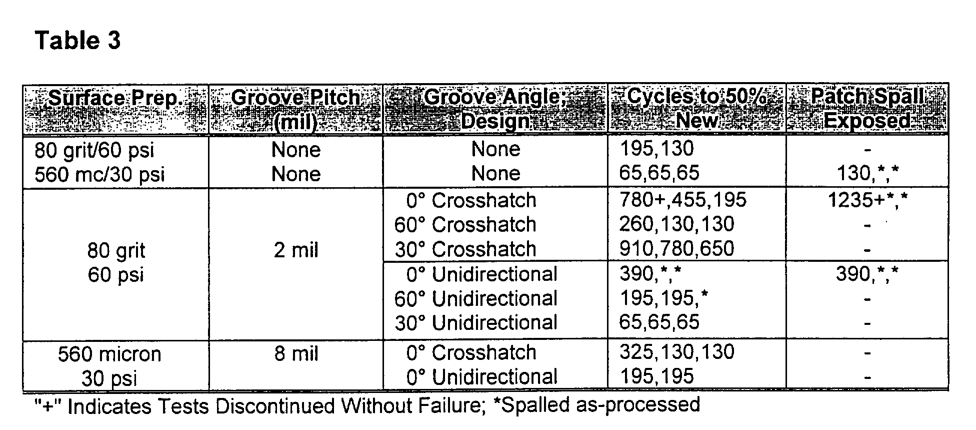

Similar to the FCT results, the best performing patch replacements were made after grooving with 2 mil pitch grooves and at a grooving angle of 30°. However, unlike the FCT testing, groove geometry had significance. Cross-hatched grooves out-performed the unidirectional grooves in the burner rig testing. From Table 3, it appears that cross-hatched grooves outperformed unidirectional grooves for new samples, and that 30° crosshatched grooves having 2 mil spacing outperformed other groove designs. Repaired coatings are expected to perform in a similar manner.

The present invention also comprises the thermal barrier coating system formed by the above-described methods as well as the turbine component with the replacement TBC formed by the foregoing methods.

Although the present invention has been described in connection with specific examples and embodiments, those skilled in the art will recognize that the present invention is capable of other variations and modifications. For example, while in the preferred embodiment the grooves are cross hatched, uni-directional grooves were also found to effectively repair locally spalled material.

## Claims

1. A process for localized repair of a turbine component having a surface with a damaged thermal barrier coating system comprising the steps of:
cleaning a spalled region of the exposed surface of the component;
texturing the exposed surface to produce a textured surface having an array of spaced grooves of predetermined groove spacing, predetermined groove geometry, and predetermined wall angle with the exposed surface; and
depositing a replacement thermal barrier coating over substantially only the textured surface.

2. The process of claim 1 wherein the step of texturing the exposed surface includes impinging a high energy beam on the exposed surface to produce the array of spaced grooves of predetermined groove spacing, predetermined groove geometry and predetermined wall angle with the surface.

3. The process of claim 2 wherein the step of texturing the exposed surface with a high energy beam includes impinging an electron beam or a laser beam on the exposed surface.

4. The process of claim 3 wherein the step of texturing the exposed surface by impinging a laser beam from an excimer laser further includes impinging the beam at a power level of between about 25 to 40 watts and at a beam traverse speed of about 2 inches per minute to about 15 inches per minute.

5. The process of claim 1 wherein the groove spacing is from about 1 mil to about 8 mil.

6. The process of claim 1 wherein the step of texturing the exposed surface of the component includes texturing the exposed surface substrate.

7. The process of claim 1 wherein the step of depositing a replacement thermal barrier coating over substantially only the textured substrate further includes first depositing a bond coat over the textured substrate without concealing the texturing, the followed by depositing a ceramic layer over the bond coat.

8. The process of claim 1 further including the additional step of depositing a bond coat over the exposed surface substrate.

9. The process of claim 1 wherein the step of texturing includes texturing the deposited bond coat.

10. The process of claim 8 wherein the step of depositing a replacement thermal barrier coating over substantially only the textured bond coat.
